# EUROPEAN PATENT SPECIFICATION

(11) **EP 2 614 264 B1**
(45) Date of publication and mention of the grant of the patent: **06.05.2015**
(21) Application number: 10757025.1
(22) Date of filing: 08.09.2010
(51) Int. Cl.: F15B 9/12, F16C 1/12, F16H 61/30

(54) **SERVO ASSISTED ACTUATING SYSTEM FOR A MULTISPEED GEARBOX OF A VEHICLE**
SERVOGESTÜTZTES BETÄTIGUNGSSYSTEM FÜR EIN FAHRZEUGGETRIEBE MIT MEHREREN GESCHWINDIGKEITEN
SYSTÈME D'ACTIONNEMENT ASSISTÉ PAR UN SERVOMÉCANISME POUR BOÎTES À PLUSIEURS VITESSES D'UN VÉHICULE

(43) Date of publication of application: 17.07.2013
(73) Proprietor: Kongsberg Automotive As, 3601 Kongsberg (NO)
(72) Inventor: BJOERKGARD, Sven, CN-215122 Suzhou (CN); NORHEIM, Daniel, N-3612 Kongsberg (NO); MÜLLER, Bert, 40882 Ratingen (DE)
(74) Representative: UEXKÜLL & STOLBERG
(86) International application number: PCT/EP2010/005495
(87) International publication number: WO 2012/031612

(56) References cited:
- DE-A1- 19 730 683
- FR-A1- 2 337 635
- JP-A- 8 184 371
- JP-U- 51 032 400

## Description

The present invention relates to a servo assisted actuating system for a multispeed gearbox of a vehicle, comprising a servo cylinder, a cable adapted to be connected to a lever at one end portion, e.g. to a gear lever or a clutch, and to be connected to an actuating component by a coupling mechanism at its other end portion, and a control valve to transmit cable movements to actuating movements of the actuating arm, the actuating component controlling the control valve to selectively supply pressurized fluid to the servo cylinder for operating it.

The present invention relates to a servo assisted actuating system comprising a servo cylinder, a cable adapted to be connected to an operating lever (e.g. a gear lever or a clutch) at one end portion and to be connected to an actuating system by a coupling mechanism at its other end portion, and a control valve, the actuating system controlling the control valve to selectively supply pressurized fluid to the servo cylinder for operating it. Servo assisted actuating systems within the automotive industry are primarily used to assist gearshift operations, such as shift and select. In that application, push-pull cables are suitable cables since they will allow operations of movements in two directions. But also clutch actuation of a vehicle might be supported by a servo system, commonly referred to as a clutch servo system. For the sake of clarity the present invention will be disclosed in the context of a servo system for a multispeed gearbox of a vehicle using a push-pull cable. It will be become apparent for the person skilled in the art that the present invention is not limited to a servo system using push-pull cable as there might be applications where there is only a need for an, e.g., servo assistance for a pull mechanism.

A servo assisted actuating system usually comprises a control valve which is linked to a gear lever and a servo cylinder which may be a double-acting pneumatic cylinder with a piston which divides the cylinder interior into a first and a second chamber. When the gear lever makes a shift or select movement a link such as a cable transmits this movement to the control valve which in turn supplies pressurised fluid to the first or second chamber of the servo cylinder to course the desired movement of the piston. The movement of the piston is usually transmitted via a piston rod which is directly or indirectly connected to a control rod of the gearbox. In order to perform a shift movement the control rod has to be rotated around its longitudinal axis, whereas for performing a select movement the control rod has to be moved along its axial direction. The present invention may be applied to both, namely servo assisted actuating systems for shift movements and servo assisted actuating systems for select movements. However, the more important field of application is servo assistance for performing the shift movement which generally requires more afford to be apply to the manual gear lever.

EP 0 251 807 B1, JP408184371 and EP 0 692 658 A1 disclose typical arrangements for servo assisted actuating systems for multispeed gearboxes of vehicles.

The movement of manual gear levers is transmitted to the fluid actuated cylinders for example by cables. In this application push-pull cables will often be used as an the example for a cable but it should be understood that the present invention is applicable to any cable transmission. Push-pull cable connections normally have a conduit, often made of flexible material such as plastic hose, which is fixed with respect to the vehicle structure, and a push-pull cable (sometimes also referred to as cable core) which is moveably received therein and which is driven by an actuator such as a manual gear lever to move back and forth with respect to the conduit. At the end opposite to the manual gear lever the end portion of the push-pull cable has to be connected to a member that is controlled by the push-pull cable. Various coupling mechanisms or core adjusters are known which are used for coupling the end portion of the cable to another member. An example for such coupling mechanism is for example disclosed in EP 2 184 501 A1. This coupling mechanism comprises a locking body having an open channel in one of its surfaces. The open channel has a semicircular ground portion dimensioned to receive the end portion of the push-pull cable, the ground portion of the channel comprising a plurality of grooves disposed in regular distances along the longitudinal direction of the channel and extending in planes perpendicular thereto to engage with complementary grooves on the outer surface of the end portion of the cable. A pivotal cover is pivotably connected to the locking body and can be pivoted into a closed position in which a portion of the pivotal cover projects into the channel to urge the end portion of the cable received therein towards the ground portion of the channel. The pivotal cover comprises a projection on a flexible end wall which is arranged to cooperate with a recess in the locking body such that the pivotal cover can be snapped into engagement with the locking body in the closed position to thereby retain the cable in the coupling mechanism. This coupling mechanism and many others in the prior art have to be accessible, either for manual access or for access by tools, so that they can be manually manipulated to retain or release the cable.

According to recent ideas there could be also advantageous arrangements for servo assisted actuating systems in which the end portion of the push-pull cable is guided into an inner chamber of the servo cylinder where it has then to be connected to an actuating member. A possible arrangement of this kind will be described in more detail in connection with a preferred embodiment described in the Figure description. In such arrangement an actuating element which is to be coupled to the end portion of the push-pull cable would extend from its inner end inside of the inner chamber of the servo cylinder to an outer end which is arranged to act on the control valve to control its operation. In such arrangement the problem would arise that the end portion of the push-pull cable would have to be introduced into the inner chamber by pushing it through an entry opening of the servo cylinder and then would have to be coupled to the inner end portion of the actuating element by a coupling mechanism within the closed inner chamber of the servo cylinder, without any possibility of direct access to the cable end portion or coupling mechanism within the closed inner chamber.

It is an object of the present invention to provide a servo assisted actuating system for a multispeed gearbox which is arranged such that the end portion of a cable introduced into a closed inner chamber of the servo cylinder may be coupled to an actuating component to be controlled by the cable.

This object is achieved by a servo assisted actuating system comprising the features of claim 1. Preferred embodiments of the invention are set out in the dependent claims.

According to the present invention the actuating component is an actuating arm which extends from an inner chamber of the servo cylinder to the outside thereof to control the control valve by actuating movements (which may be pivotal or linear movements of the actuating arm). The actuating arm may extend essentially in radial direction of the cylinder and perpendicular to the longitudinal direction of the cable end portion.

The actuating arm has disposed along its length a bearing portion, the bearing portion being disposed in a bearing in the servo cylinder that allows for actuating movements of the actuating arm when the actuating arm is in an operative position. In addition, the bearing portion and the bearing are adapted to allow longitudinal movements such that the actuating arm is moveable along its longitudinal direction between its operative position, in which the actuating arm is operable to control the control valve by actuating movements, and a shifted release position in which the bearing portion is shifted, wherein the actuating arm and the coupling mechanism are adapted such that the actuating arm is in engagement with the coupling mechanism at least in its operative position.

The coupling mechanism comprises two coupling members which are disposed within the inner chamber and are moveable relative to each other between an open position in which an end portion of the cable may be moved into a gap between the coupling members when the cable is advanced through an entry opening into the servo cylinder, and an engaged position in which the coupling members engage and hold and end portion of the cable disposed therebetween. The coupling mechanism and the actuating arm are arranged to cooperate such that movement of the actuating arm from its release position to its operative position brings the coupling members from the open position to the engaged position on the end portion of the cable.

In this arrangement according to the invention the actuating arm which is actuated by operation of the cable has a twofold function. On the one hand it is, in its operative position, disposed in the servo cylinder such that it extends from the inner chamber, where it is coupled by the coupling mechanism to the cable, to the outside to act on the control valve to transmit movements of the cable to the control valve by actuating movements of the actuating arm. In addition, the actuating arm has a further function and is arranged to be moveable in its longitudinal direction from a release position to the operative position. The actuating arm and the coupling mechanism are arranged to cooperate such that a longitudinal movement of the actuating arm from its release position to the operative position causes the coupling mechanism to close, i.e. to come from its open position to the engaged position on the end portion of the cable. In a preferred embodiment actuating arm and coupling mechanism are further adapted to cooperate such that by pulling the actuating arm from its operative position to its release position the movement of the actuating arm causes the coupling mechanism to open, i.e. to move from the engaged position clamping the end portion of the cable to the open position in which the end portion of the cable may be longitudinally moved. In other words, by mounting the actuating arm in the servo cylinder to be longitudinally moveable, from the operative position in which pivotal movements caused by the cable control the control valve, to the release position, the actuating arm additionally serves the purpose to actuate the coupling mechanism, without any need for direct access to the coupling mechanism. In other words, the end portion of the cable may simply be introduced through its entry opening into the servo cylinder, be advanced to the coupling mechanism, whereafter the actuating arm is simply pushed from its release position to its operative position which closes the coupling mechanism so that the coupling members engage the end portion of the push-pull cable and secure it, in particular against movements in the longitudinal of the cable in which direction forces are transmitted by the cable to the coupling mechanism and eventually to the actuating arm.

In a preferred embodiment the bearing portion of the actuating arm and the bearing are adapted to allow pivotal movements of the actuating arm around its bearing portion as actuating movements for operating the control valve. The bearing portion may for example be a rounded projection projecting from the surface of the actuating arm disposed at a location along the length of the actuating arm, for example about half way of the length of the actuating arm. The rounded projection may project from both opposing surfaces of the actuating arm. The bearing may be formed by a passageway extending from the inner chamber of the servo cylinder in the direction to the outside of the servo cylinder, for example in a direction perpendicular to the longitudinal axis of the servo cylinder. Through this passageway the actuating arm extends and its bearing portion is disposed within the passageway, wherein the transverse widths of the actuating arm at its bearing portion corresponds to the widths of the passageway. In this manner the actuating arm is able to pivot over a predetermined pivotal range (which is limited by the width of the passageway), and is able to slide with its bearing portion along the passageway to thereby enable the actuating arm to be moved from its release position to its operative position by sliding the bearing portion along the passageway as a bearing. Alternatively the bearing portion may be any kind of bearing surface (for example a partially spherical surface) which is received in a complementary shaped bearing member such that the bearing portion may pivot within the bearing member; in such an arrangement the bearing members may be arranged to be moveable in a track provided in the servo cylinder to allow movements of the actuating arm in its longitudinal direction by longitudinal moving the bearing members with their bearing portion of the actuating arm seated therein.

In principle it is also possible that the actuating arm may be adapted to perform linear actuating movements, essentially in a direction parallel to the longitudinal direction of the cable. In such arrangements the actuating arm must be disposed with its bearing portion in a linear guide extending in a direction parallel to the longitudinal direction of the cable to allow for the longitudinal actuating movements of the actuating arm. In this case the bearing portion could be just a plane surface portion of the actuating arm which is in sliding contact with the surfaces of the linear guide. To allow in addition for longitudinal movements of the actuating arm along its longitudinal direction from the release position to the engaged position, the longitudinal guide may for example be formed as a slot or a longitudinally extending passageway with an extension along the longitudinal direction of the actuating arm which is sufficient to guide the movement of the actuating arm from the release position to the engaged position. In this case the bearing portion would be a planar portion of the surface of the actuating arm adapted to be slideable along the passageway in the longitudinal direction of the actuating arm as well as perpendicular thereto for actuating movements.

In a preferred embodiment the coupling mechanism and the actuating arm are further arranged to cooperate such that movement of the actuating arm from its operative position to its release position bring the coupling members from the engaged position on the end portion of the cable to the open position. This preferred arrangement allows to open the coupling mechanism again by exerting a force on the actuating arm to move it to the release position, which is preferred in order to allow that the cable is readjusted in the coupling mechanism or to allow that a new cable is coupled to the servo cylinder.

In a preferred embodiment the coupling mechanism comprises as a first coupling member a locking body to be connected with one end to the actuating arm and having an open channel in its opposite end, wherein the open channel has a semicircular ground portion dimensioned to receive the end portion of the push-pull cable and has diverging side walls extending from the ground portion, which side walls flare to the open end of the channel. At least the ground portion of the channel comprises a plurality of grooves disposed in regular distances along the longitudinal direction of the channel and extending in planes perpendicular thereto to engage with complementary grooves on the outer surface of the end portion of a cable. The second coupling member of the coupling mechanism is a snap-fastener wherein the locking body is moveable relative to the snap-fastener between the engaged position in resilient engagement with the snap-fastener, in which engaged position a portion of the snap-fastener projects into the channel to urge the end portion of the cable received therein towards the ground portion of the channel, and the open position in which the locking body is out of engagement with the snap-fastener and moved vertically away therefrom such that the projecting portion is moved further away from the ground portion of the channel. The snap-fastener and the locking body are arranged such that a force urging the two coupling members from its release position towards each other brings the locking body to the engaged position, and a force in the opposite direction brings the locking body from the engaged position to the release position. A sleeve disposed in the inner chamber holds housing parts that partially surround the locking body and the snap-fastener to hold them retained in a range between the engaged and the release position and positioned such that an end portion of the cable may be introduced into the channel of the locking body by axially pushing the cable forward through the entry opening. At the same time the housing parts allow for relative movement of the locking body relative to the snap-fastener between their engaged and open position. The housing parts also provide support for the snap-fastener from behind such that a force urging the locking body towards the snap-fastener supported from behind brings them to their engaged position.

Preferably the inner end portion of the actuating arm and the locking body comprise snap-in engagement means which cause a snap-in engagement of the actuating arm on the locking body when the actuating arm is pushed inwardly to bring it to its operative position, wherein the snap-in engagement means are arranged such that the force needed to release the snap-fastener from the locking body is lower than the force needed to release the snap-in engagement means between actuating arm and locking body. In this manner it is ensured that the locking body can be pulled away from the snap-fastener by exerting a pulling force on the actuating arm, whereas it is on the other hand also possible to release the actuating arm from the locking body by exerting a higher force.

In an alternative embodiment of the actuating system the two coupling members of the coupling mechanism are to jaw members which are held in the inner chamber and which are pivotally connected to each other at one end to be pivotable between the engaged position in which they form a cable engaging channel and an open position in which the space in between them is enlarged such that the end portion of a cable may be moved longitudinally therein. The jaw members comprise control surfaces, and the inner end portion of the actuating arm comprises cooperating control surfaces such that, when the actuating arm is longitudinally moved from its release position to operative position, the respective control surfaces cause the jaw members to be move to the engaged position. Preferably the inner end portion of the actuating arm and the jaw members further comprise snap-in engagement members which cause a snap-in engagement member which cause a snap-in engagement of the actuating arm on the coupled jaw members when the actuating arm reaches its operative position. Preferably, a spring element is provided to bias the jaw members to the open position. This ensures that the jaw members are brought and held in the open position when the actuating arm is retracted to the release position.

In a referred embodiment the servo cylinder comprises a piston and a piston rod extending therefrom and the end portion of the push-pull cable may be guided via a through hole extending through the piston rod and the piston into the inner chamber of the servo cylinder where the coupling mechanism is located. This coaxially aligned arrangement of the cable, piston rod and servo cylinder is particularly advantageous under several aspects regarding constructional simplicity, flexible and simple mounting options and force transmission characteristics. The latter is among other reasons due to the fact the servo cylinder is the coaxial extension of the cable, the servo cylinder amplifying the cable force, while the resulting counterforce to the amplified force is absorbed by the vehicle structure to which the piston rod of the servo cylinder is connected.

In a preferred embodiment a handle or operating element is moveably mounted on the servo cylinder or the control valve and is moveable between an open and a closed position. The handle is arranged to act on the outer end portion of the actuating arm such that, when the handle is moved from its open to the closed position, a force is exerted on the outer end of the actuating arm which causes the actuating arm to be moved from the release position to its operative position. This is allows to close the coupling mechanism on the cable inside the inner chamber of the servo cylinder by a predetermined actuating movement of the handle, which may be a linear movement, caused by pushing the handle or by sliding it along a predetermined path from the open to the closed position. Alternatively the movement of the handle may be a pivotal movement. In the latter embodiment the handle is pivotally mounted on a servo cylinder or on the control valve at a pivot point spaced apart from the actuating arm and is adapted to cooperate with the outer end portion of the actuating arm such that, when the handle is pivoted from a folded way, open position towards the servo cylinder or control valve to the closed position thereon, a force is exerted on the outer end of the actuating arm which causes the actuating arm to be move from the release position to the operative position.

The servo assisted actuating system is often supplied as a preassembled unit and is then mounted to the gearbox of a vehicle. The connection to the cable is often done at the main assembly line at the manufacture, where there is very limited time. The proposed handle is normally hanging in a downward orientation from the servo assisted actuating system. During assembly the push-pull cable is inserted into the servo-cylinder and the operator grasps the handle hanging down from the actuating system and folds at up to a closed position on the servo assisted actuating system, thereby bringing the coupling mechanism into engagement on the inserted push-pull cable inside of the servo cylinder. Of course the same simplification of the mounting process may be achieved by arranging the handle for to be operable by pushing or sliding it instead of a pivotal handle.

Several embodiments may be used to transfer force from the movement of the handle to the end portion of the actuating arm to move it to its operative position. For example, there could be a pushing member provided at the handle which contacts the end portion of the actuating arm and exerts pressure thereon when the handle is moved towards the servo cylinder for the control valve. An engaging pawl mechanism could be provided which is arranged such that the handle may be moved to a final position against a stop, whereafter a spring mechanism causes a slight backward movement of the handle to a locked position in which the handle is hold by the engaging pawl mechanism. In this manner it could for example be ensured that there is no contact between the handle mechanism and the end portion of the actuating arm which could affect the actuating movements of the actuating arm.

In any case it is preferred that an engaging pawl mechanism associated with the handle is provided, which engaging pawl mechanism locks the handle in the closed position on the servo cylinder or the control valve. In this connection it is also preferred that feedbacks means are provided that generate an audible or visible indication when the engaging pawl mechanism locks the handle in the closed position. This makes it particularly easy for the operator to immediately recognize that the handle has been properly closed and thereby the coupling mechanism has been properly engaged on the cable.

Preferably, the handle may further be provided with opening means which, when the handle is turned from its closed position to a folded away position, exert an outwardly directed force on the outer end of the actuating arm so as to move the actuating arm from the operative position to the release position. This could for example be realized by having a cord or chain connected to the end portion of the actuating arm and to the handle and guided over a transmission which is arranged to convert the handle movement to a linear movement over a limited distance along the longitudinal direction of the actuating arm. Alternatively the end portion of the actuating arm could be provided with a slide body which is received in a track portion on the inner surface of the handle such that the actuating arm is, when the handle leaves the closed position, pulled out along its longitudinal direction and slides at the same time in the track portion (caused by the pivoting movement of the handle), and then leaves the open track portion to allow the handle to be folded away completely.

In a preferred embodiment feedback means are provided that generate an orderable or visible indication when the handle reaches the closed position. In particular the feedback means may be adapted to provide said indication when the engaging pawl mechanism locks the handle in its closed position.

In the following section the invention will be described with reference to preferred embodiments illustrated in the Figures in which
Fig. 1 shows a schematical overview of a servo assisted actuating system according to the present invention;
Fig. 2 shows a cross-sectional view of a servo assisted actuating system according to the invention;
Fig. 3 shows a cross-sectional view of the coupling mechanism part of an actuating system according to the invention;
Fig. 4 shows a front view of the coupling mechanism part of Fig. 3;
Fig. 5 shows an exploded view of the coupling mechanism part of Fig. 3;

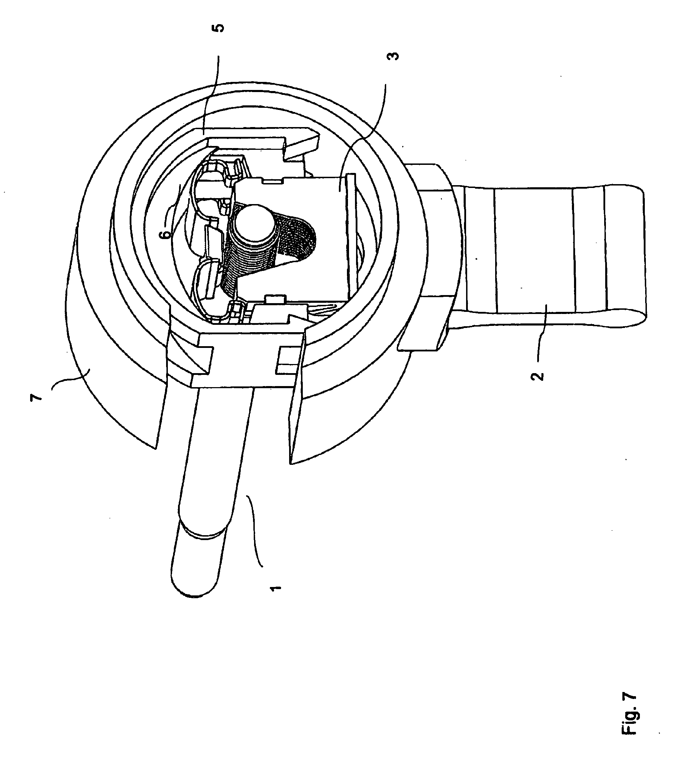

Fig. 6 to 8 show subsequent states of the coupling mechanism part of an actuating system according to the invention when the cable is introduced into the coupling mechanism and this is brought to the engaged position;
Fig. 9 to 13 show subsequent states of a variant of the coupling mechanism part of an actuating system according to the invention when the cable is introduced into the coupling mechanism and this is brought to the engaged position;
Fig. 14 shows a cross sectional view of variant of the coupling mechanism part of an actuating system as in Figs. 6 to 13 with some housing parts included which were left out in Figs. 9 to 13 for better visibility and clarity;
Fig. 15 shows a side view of a further servo assisted actuating system with a handle in an open state; and
Fig. 16 shows a side view of the actuating system as in Fig. 15 with the handle in its closed position on the actuating system.

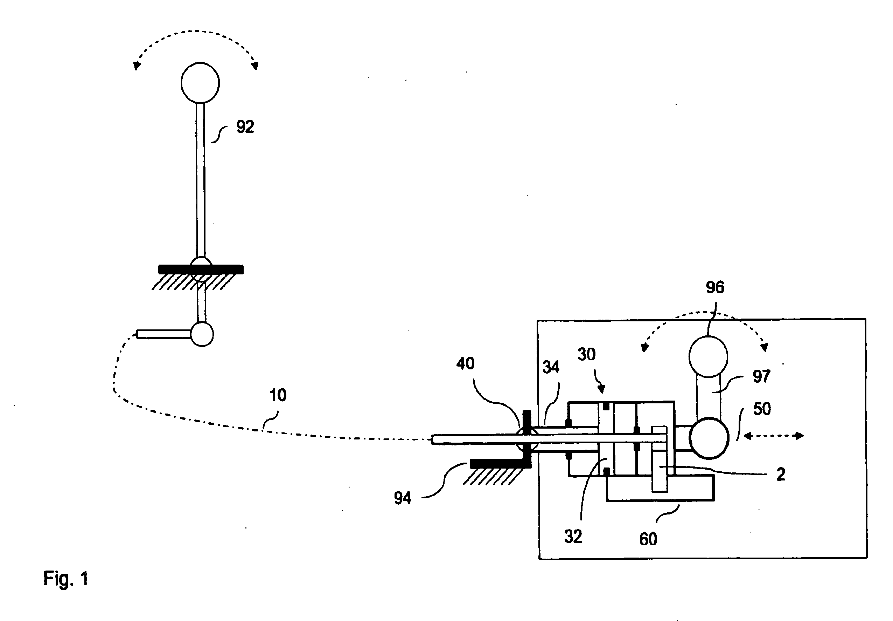

First a brief overview over the basic components and their relation in the system of the invention in a particular embodiment is given with reference to the schematical overview of Fig. 1. A gear lever 92 is pivotally mounted in the vehicle cabin, and movements of the gear lever 92 are transferred to movements of a cable connection 10. In this example a pivotal movement of the gear lever in the plane of the Fig. 1 is schematically indicated by an arrow which corresponds to a gear shift movement of the transmission. The invention is not limited to gear shift movements but can in principle also be applied for performing servo assisted gearbox operations, for example gear select movements, as will be explained in more detail below, or clutch operation.

In the schematical illustration of Fig. 1 the cable connection 10 is shown in a simplified manner as a tube at its end portion and as a dashed-and-dotted line in the intermediate region between the end portions. The design of the cable connection 10 will be described in more detail below.

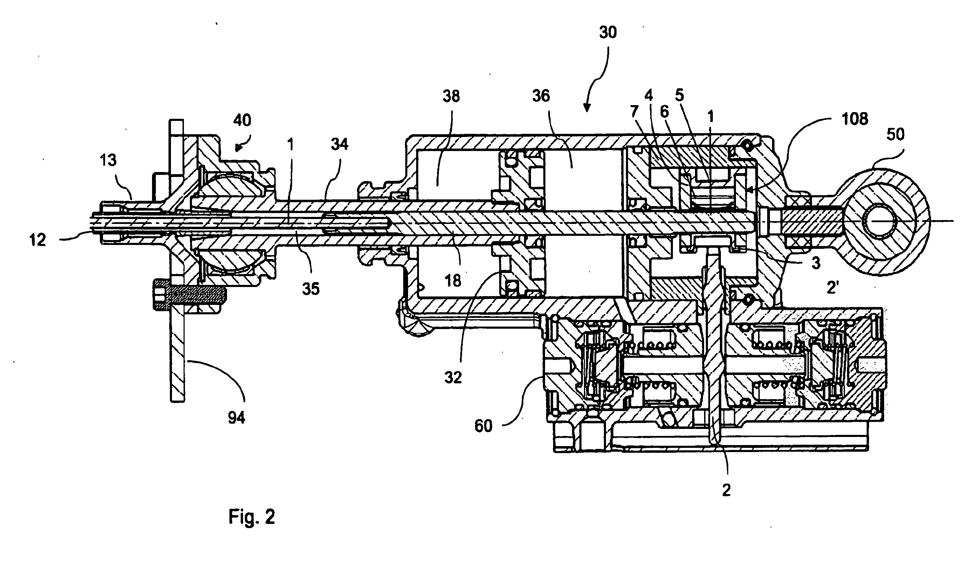

With reference to Figs. 1 and 2, a servo cylinder 30 comprises a piston 32 which is slideably moveable therein. The piston 32 comprises a piston rod 34 which extends therefrom and to the outside of the servo cylinder housing. The piston rod is provided with first mounting means 40 by which it is mounted on a part 94 which is fixed with respect to the vehicle structure, i.e. to any part or member that is not moveable with respect the frame and the chassis of the vehicle, e.g. the gearbox housing.

The cable 1 is guided through a central through hole 35 in the piston rod 34 and further through the piston 32 into an inner chamber of a servo cylinder 30. At the end of the push-pull cable in the servo cylinder 30 an extension member 18 of the push-pull cable is connected to an actuating arm 2 which in this embodiment is pivotally mounted therein and which transfers longitudinal movements of the push-pull cable to a control valve 60. Controlled by the position of the actuating arm 2 pressure fluid is selectively supplied by the control valve 60 to the servo cylinder 30 to move the piston 32 backward and forward, depending on the positioning of the actuating arm 2 determined by the push-pull cable. Since the piston rod 34 is mounted by first mounting means 40 to a fixed part 94 of the vehicle structure, also the piston remains fixed, and the selective operation of the control valve 60 leads to a corresponding movement of the servo cylinder 30 as a whole with respect to the fixed piston 32, i.e. the servo cylinder 30 is moving to the left hand side or right hand side relative to the fixed part 94 when the control valve 60 is operated.

The servo cylinder 30 is provided with second mounting means 50 which are adapted for connecting the servo cylinder to a control rod 96 of the gearbox. In the illustration of Fig. 1 the control rod 96 is a shaft extending perpendicular to the plane of the Figure. To this shaft 96 a crank lever 97 is fixed which extends to the second mounting means 50 and which is in engagement with the second mounting means 50 in order to transfer movement of a second mounting means 50 in the horizontal direction into a rotation of the shaft 96 around its longitudinal axis. The lever is coupled to the second mounting means in a rotatable manner such that it is rotatably moveable with respect to the second mounting means 50 which allows to transmit a linear movement of a servo cylinder 30 into a rotational movement of the shaft 96 around its longitudinal axis. It will be explained in more detail below that the movement of the servo cylinder in this arrangement is not a linear movement in a strict sense but requires a certain swiveling movement of the servo cylinder with respect to the first mounting means 40 in order to allow the second mounting means 50 to follow a portion of an arc movement around the longitudinal axis of the shaft 96 which is rotated by the servo cylinder.

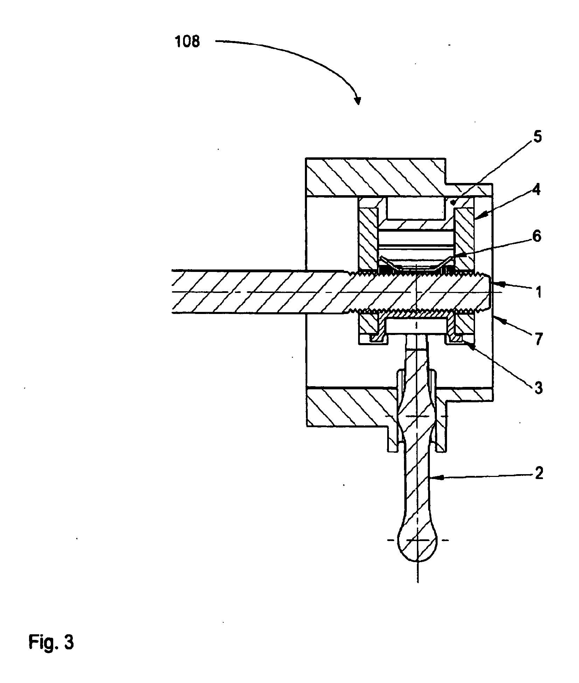

In Fig. 2 also the coupling mechanism 108 is shown which releaseably couples the end portion of the cable 1 to the actuating arm 2. The actuating arm 2 extends from its inner end coupled to the coupling mechanism 108 to the outside of the servo cylinder 30 and into control valve 60 for actuating the control valve 60 by pivotal movements of the actuating arm 2 around its bearing portion 2' which is received in a passageway of a bearing sleeve 7. The coupling mechanism 108 is shown in more detail in Fig. 3 to 5 which show detailed views of the coupling mechanism 108 in a sectional view, in a front view and in an exploded view, respectively. The actuating arm 2 comprises a bearing portion 2' which is disposed essentially in the middle of its longitudinal extension and which is formed as a rounded transverse projection formed on both sides of the actuating arm 2. This bearing portion 2' is received in a passageway of the bearing sleeve 7. This passageway has a width which is slightly higher than the transverse width of the bearing portion 2' such that the actuating arm 2 is able to pivot around its bearing portion 2' on the one hand, and may be slid or shifted within the passageway along its longitudinal direction on the other hand.

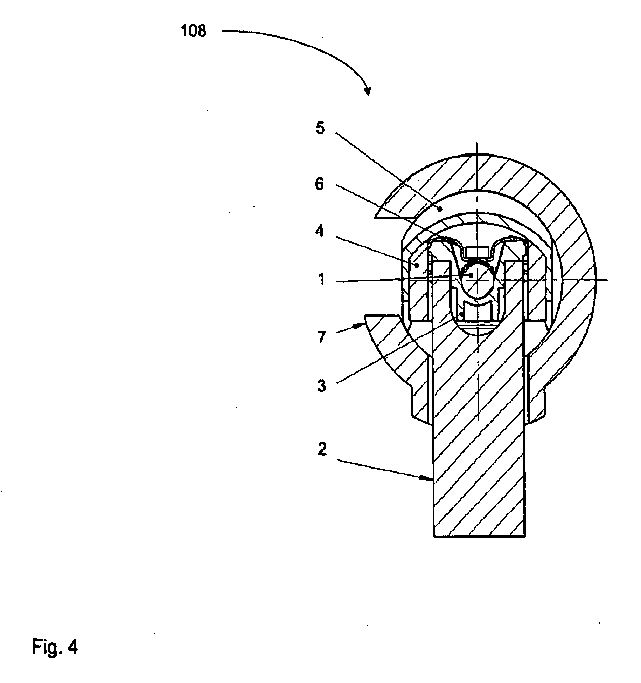

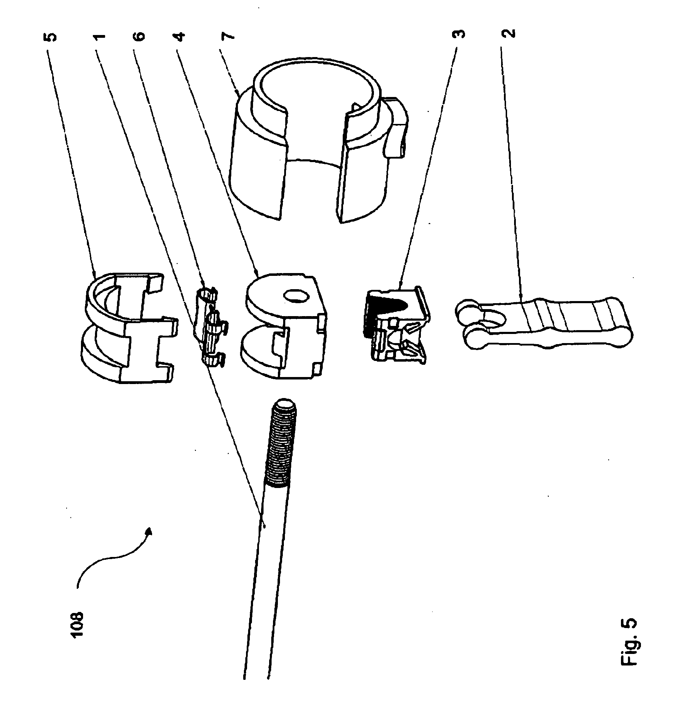

The coupling mechanism 108 further comprises a locking body 3 which, with one of its ends, is connectable to the actuating arm 2, wherein the actuating arm 2 has a fork-like or clevis end portion (see Fig. 4 and 5). The locking body 3 and the end portion of the actuating arm 2 have complementary snap-in engagement means which allow to couple the actuating arm 2 to the locking body 3 by pushing the snap-in engagement means into each other. At least the locking body 3 may have a certain elastic flexibility to provide for a releasable snap-in engagement. On the side facing away from the actuating arm 2 the locking body 3 is provided with an open channel which is formed of a semicircular ground portion dimensioned to receive the end portion of the push-pull cable. From the semicircular ground portion diverging side walls extend which flare to the open end of the channel. At least the ground portion of the channel comprises a plurality of grooves disposed in regular distances along the longitudinal direction of the channel and extending in planes perpendicular thereto. The end portion of the cable 1 is provided with corresponding grooves to engage with the grooves in the channel to secure the cable against longitudinal movements within the channel.

The coupling mechanism further comprises a housing 4 which receives the locking body 3 from below. The housing 4 has an open upper side for receiving a snap-in fastener 6. The open upper side of the housing 4 is closed by a clip 5 which may be mounted on the housing 4 by sliding it onto the housing 4 until projections on legs of clip 5 engage with recesses in the outer surface of the bottom part of the housing 4. The housing 4 is held in the bearing sleeve 7.

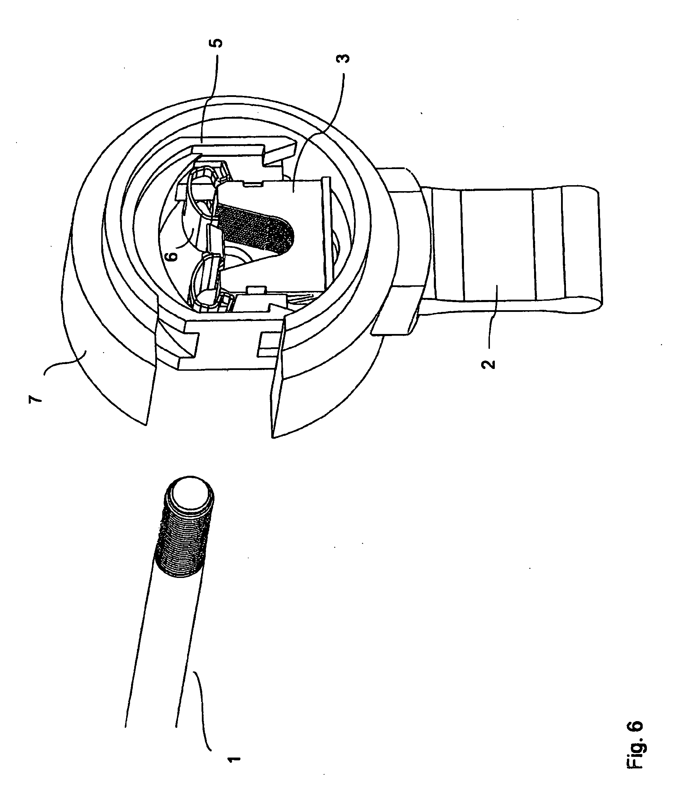

In this arrangement the snap-fastener 6 may be brought from an open position without engagement with the locking body 4 to an engaged position on the locking body 3 in which projections on elastic extensions of the snap-fastener 6 engage with recesses in the upper part of the side walls of the locking body 3. This movement which brings the locking body 3 from the open position to the engaged position on the snap-fastener 6 is shown in the sequence of Fig. 6 (open), 7 (intermediate), and 8 (engaged). This movement from the open to the engaged position can be effected by exerting an inwardly directed force on the outer end of the actuating arm 2 which is transmitted to locking body 3 which in turn is urged to the direction towards the snap-fastener 6. The snap-fastener 6 is supported by the clip 5 from behind such that the force on the locking body 3 moves the locking body 3 into engagement with the snap-fastener 6. The snap-fastener 6 has a projecting portion which, when the snap-fastener is in the engaged position, projects into the open channel and presses on to the cable end portion and urges it against the ground portion of the channel of the locking body 3, thereby fixing the cable in the locking body 3.

To close the coupling mechanism 108 force has to be applied to the outer end of the actuating arm 2. This can be done in many ways. For example, the actuating arm could be formed such that it extends through the control valve 60 so that its outer end portion is accessible to exert force manually or by a separate mechanism, as will be described in more detail below.

In this manner the servo assisted actuating system may be mounted in a very simple manner. Servo cylinder 30 with attached control valve 60 and associated cable connection 10, 12 are supplied to the assembly line, the servo cylinder is mounted, for example on a mounting bracket 94 fixed to the gearbox by attaching the first mounting means 40, whereafter the second mounting means 50 are coupled to the control rod of the gearbox in the desired manner, and the cable 1, 12 is inserted and advanced in the through hole 35 of the piston rod 34 to the desired position. At this stage the coupling mechanism 108 has to be in the open state which allows to introduce the end portion of the cable (which is formed by cable extension member 14, for example a rigid rod 14) into the open channel of the locking body 3. Thereafter force is exerted on the actuating arm 2 which is thereby moved from the release position (corresponding to the open state of the coupling mechanism 108) to an operative position in which the locking body 3 has been moved into engagement with the snap-fastener 6.

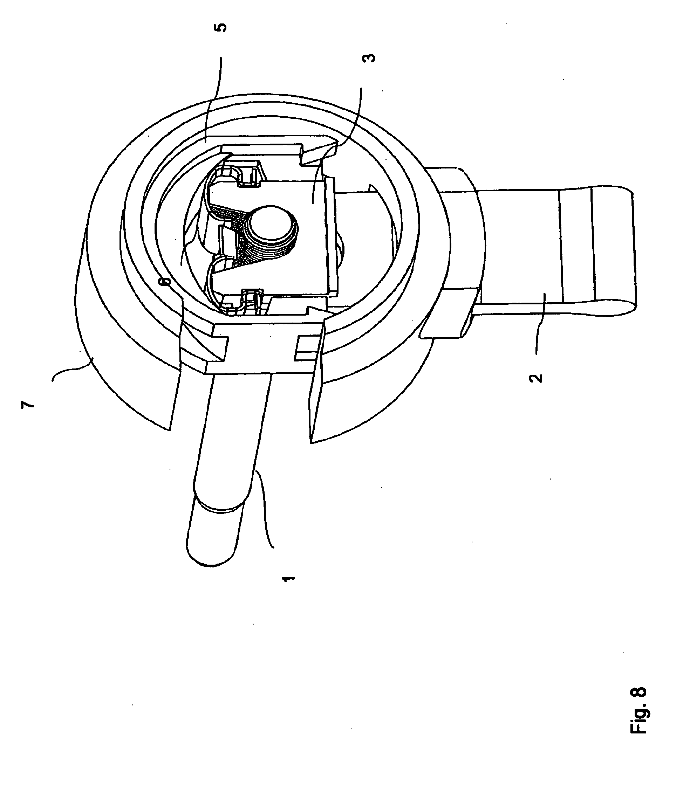

The coupling mechanism 108 may be opened again by exerting an oppositely directed force on the actuating arm 2 to bring it from its operative position to the release position which causes the locking body 3 to be moved away from the snap-fastener which is thereby disengaged because cannot follow the movement of the locking body 3 because of the end portion of the cable which prevents downward movement of the snap-fastener 6. Alternatively, stoppers may be provided inside of the housing 4 that limit the downward mobility of the snap-fastener in the housing 4. This movement sequence is the reversed of the above described Figure sequence, namely from Fig. 8, to 7 and further to 6.

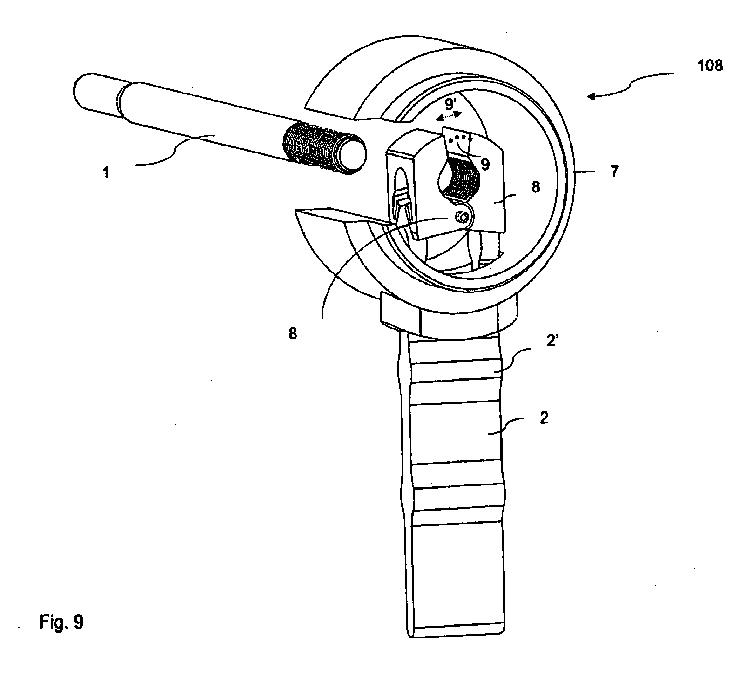

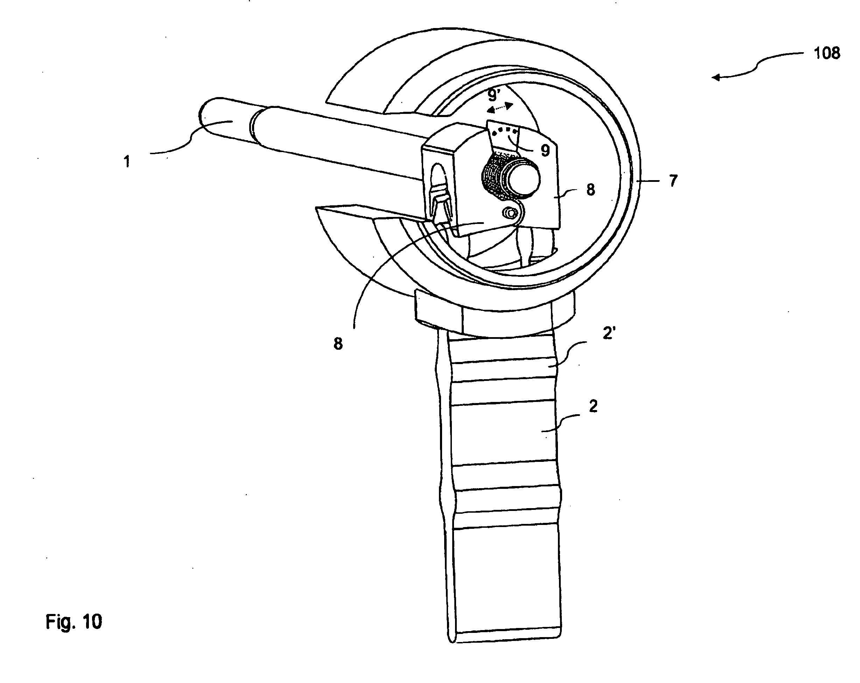

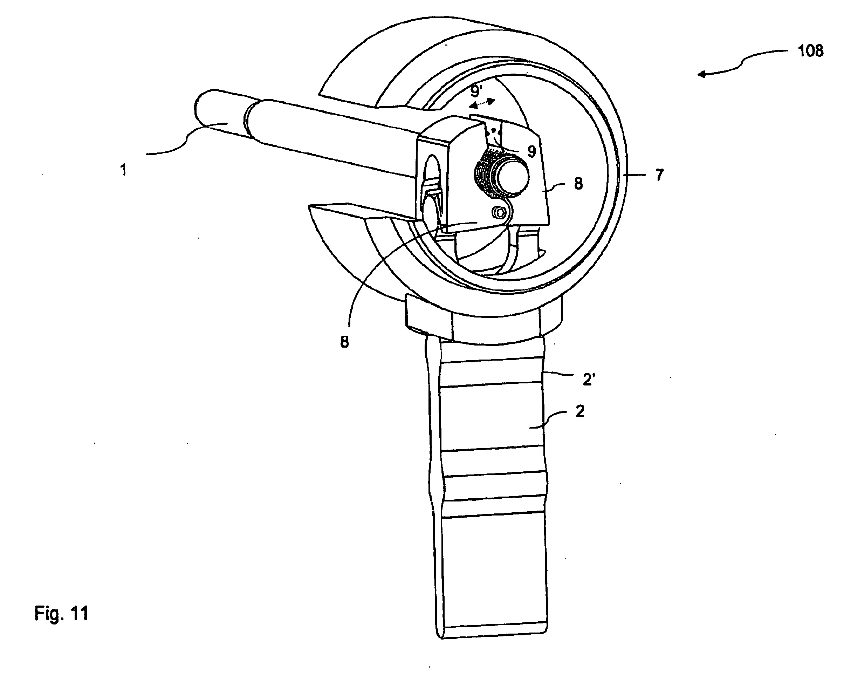

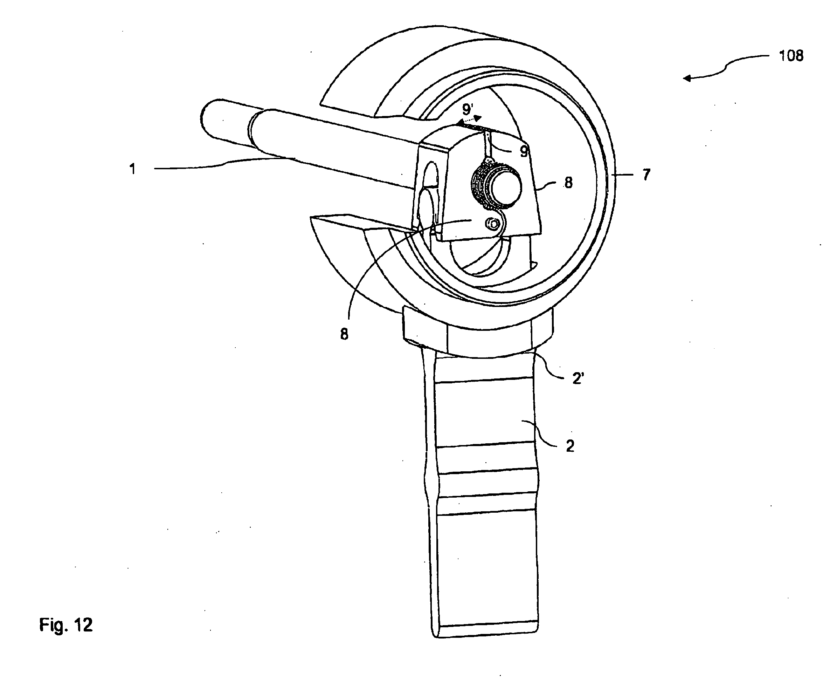

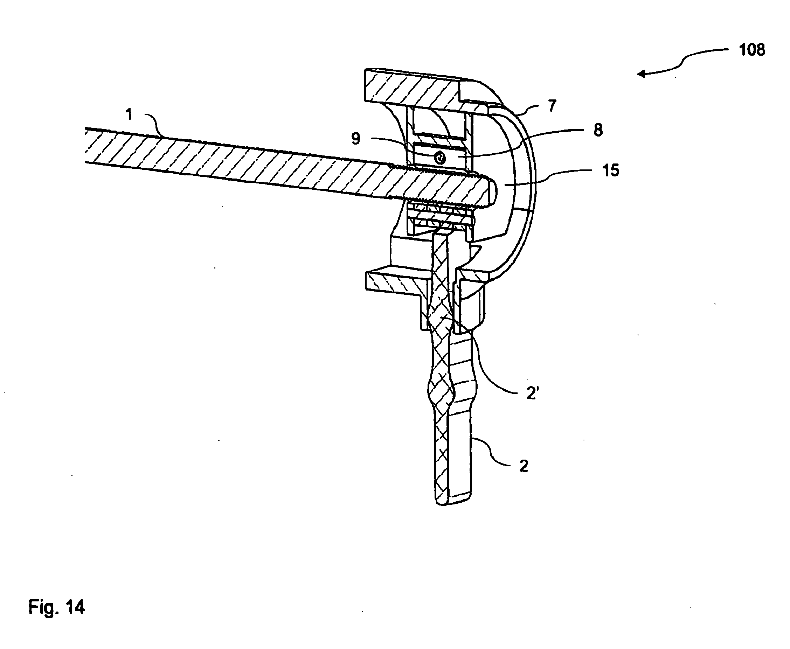

Figs. 9 to 14 show a further embodiment of the actuating system including an alternative coupling mechanism. In Figs. 9 to 13 only the inner components of the coupling mechanism are shown in order to better illustrate their function. Further parts for holding the inner component are shown in Fig. 14 and will be explained in more detail below with reference to this Figure.

The actuating arm 2 corresponds to the actuating arm of the previous embodiment. It also comprises a bearing portion 2'. Please note that this bearing portion 2' should be located in the passageway of the bearing sleeve 7 in which it is slidably received and is visible in the figures for illustration or purposes only. Inside of the bearing sleeve 7 two coupling members are provided in the form of two clamping or jaw members 8 which are pivotally connected to each other at one end thereof by a pin which extends through a bore through the jaw members 8 and which is connected to housing 15 (see Fig. 14). This pin extends partly through one of the jaw members and partly through the other of the jaw members which have meshing portions in their lower regions. In this way the jaw members are capable of pivoting with respect to each other around the pin and are held in position by housing 15.

In the outer side surfaces of the jaw members 8 control surfaces are formed (not visible in the Figures) which are provided on the ground of the recesses shown in the outer side surfaces of the jaw members 8 e.g. in Fig. 9. This ground surface of the recesses is formed as a tapering surface, i.e. the ground surfaces of the recesses in the outside surfaces are converging in the direction towards the actuating arm, or in downward direction in the Figures. The actuating arm 2 has cooperating control surfaces which are provided by the fork-like or clevis end portion of the actuating arm 2. The inner surfaces of the fork arms are formed as plane vertical surfaces facing each other. The distance between these control surfaces is slightly larger than the distance between the control surfaces of the jaw members 8 at their lower ends. By advancing actuating arm 2 with respect to the coupled jaw members 8 the straight control surfaces of the actuating arm come into contact with the tapering control surfaces of the jaw members 8. By further movement of the end portion of the actuating arm 2 towards the coupled jaw members 8 the pressure exerted by control surfaces of the actuating arm 2 gradually closes the jaw members 8 by pivoting them around the pin connecting the jaw members. This movement is shown in the sequence of Figs. 9 to 13.

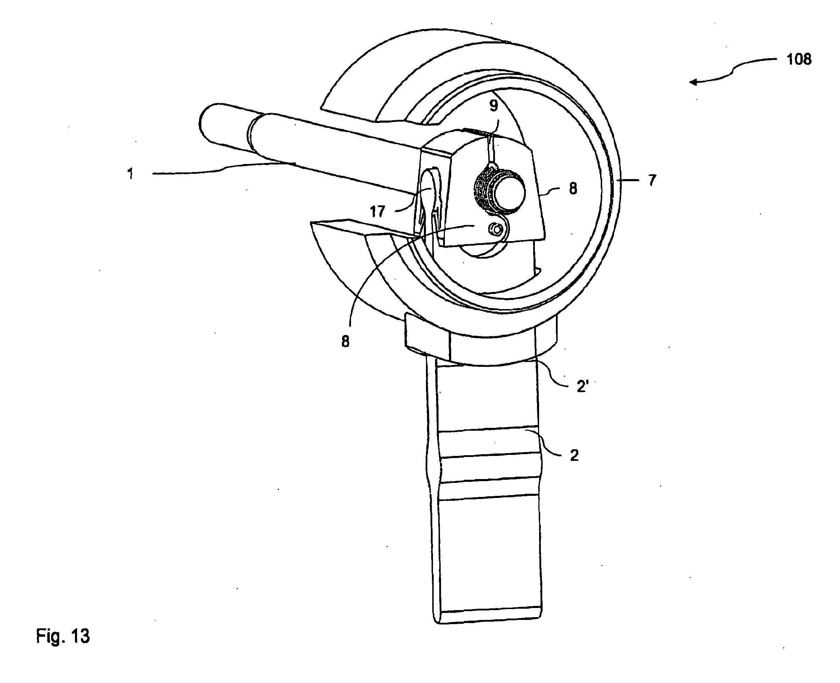

Jaw members 8 are provided having on their facing inner surfaces with open, semicircular channels dimensioned to the receive end portion of the cable 1 in the closed state (Fig. 13). The channels form an opening in which the end portion of the cable is clamped. The engagement against longitudinal movements of the cable is improved by circumferential grooves on the outer surface of the end portion of the cable, and corresponding grooves in the surfaces of the channels of the jaw members 8.

At the outer ends of the fork arms of the end portion of the actuating arm 2 circular enlargements 17 are formed, and corresponding circular recesses are formed in the outer side surfaces of the jaw members 8 for receiving the enlargements. When the enlargements 17 are received in the recesses (see Fig. 13), flexible tongs are in contact with the enlargements from below to provide an engagement between the jaw members and the end portion actuating arm 2.

At the end of the jaw members 8 opposite to the pin a spring 9 is acting to bias the jaw members 8 apart in the direction indicated by the arrow 9'. This ensures that the jaw members 8 automatically return to the open position when the actuating arm 2 is withdrawn from the jaw members, e.g. if the coupling mechanism is opened again to readjust the cable positioning or to introduce a new cable.

In Fig. 14 further mounting components of the coupling mechanism are indicated, namely the housing 15 which surrounds the area of the jaw members 8 from three sides, namely around to side areas and an upper area. The housing 15 should not cover the cable receiving channel formed by the jaw members. Bearing sleeve 7 is, as before, held coaxially in the inner chamber of the servo cylinder.

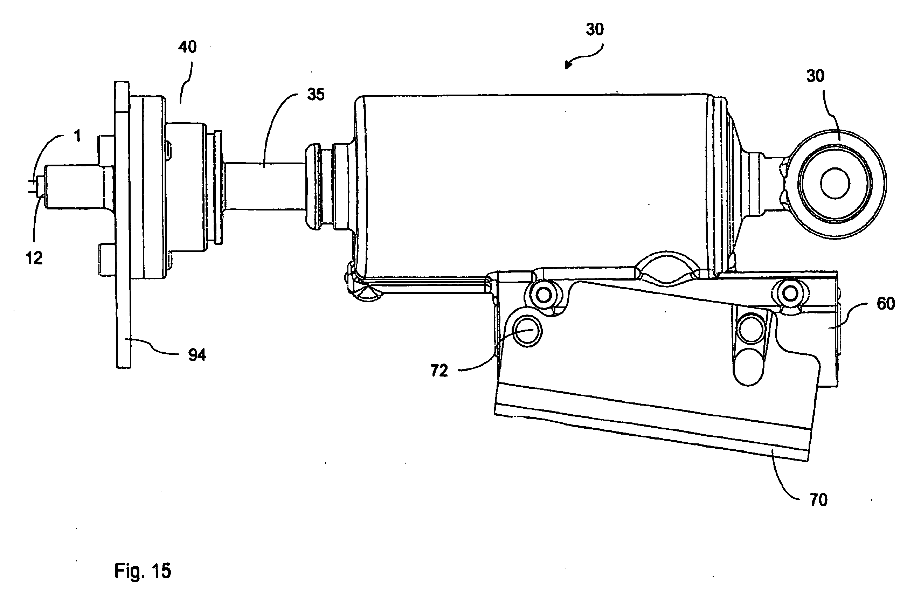

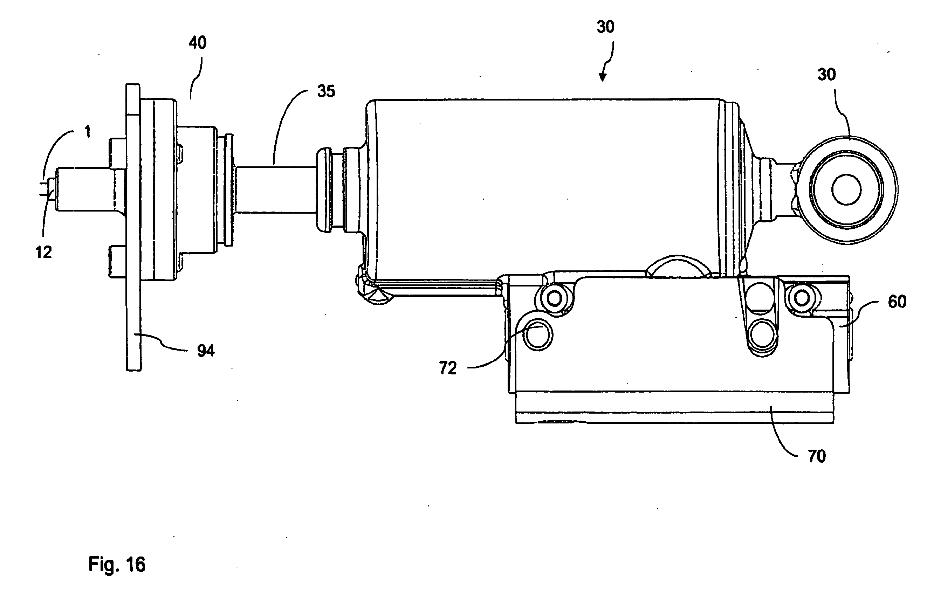

Fig. 15 and 16 show an advantageous embodiment of the actuating system according to the invention. As before, servo cylinder and control valve are integrated into one unit and the piston rod 34 mounted by first mounting means 40 to the fixed part 94 of the vehicle structure and the cable 1 is guided through the piston rod 34 into the inner chamber of the servo cylinder 35. This embodiment corresponds to the one shown in the sectional view of Fig. 2, except that a handle 70 is provided which is pivotally mounted by bolts or knobs 72 which are spaced apart from the actuating arm 2 in the longitudinal direction of the servo cylinder 30. This allows that the handle can be pivoted around the bolts or knobs 72 from a position as shown in Fig. 15 or even further opened to a closed position folded onto the control valve 60 as shown in Fig. 16.

In preferred embodiments the pivotal movement of the handle 70 from an open position to the closed position shown in Fig. 16 is used to generate the force which is needed to be exerted on the outer end of the actuating arm 2 to move it from its release position to the operative position. Various mechanisms may be applied here in order to convert the pivotal movement into a vertical movement directed onto the end portion of the actuating arm. For example, push member having certain flexibility or articulated push member arrangements can abut against the outer end portion of the actuating arm while transmitting a force in its longitudinal direction from the pivotal movement of the handle 70.

In a preferred embodiment an engaging pawl mechanism is provided which locks the handle 70 in the closed position. Preferably, an audible or visible feedback device is provided which gives an indication when the handle 70 has reached its locked position corresponding to the actuating arm being in its operative position. In this embodiment, the operator on the assembly line mounts and adjusts the cable by shifting it along its longitudinal direction to bring it into the right position. Then the handle 70 hanging down from the actuation system is a simply pivoted to its closed position in Fig. 16 which has the effect that the required force is exerted on the outer end portion of the actuating arm to bring it from its release position to its operative position, wherein this movement of the actuating arm corresponds for the coupling mechanism to be moved from its open position to its engaged position on the cable. Thus, the leverage effect of the handle 70 as it pivots around bolts 72 can be used to transfer its pivotal movement into longitudinal movement of the actuating arm 2. The audible or visible feedback gives the operator an easily recognizable feedback that the handle and thereby the coupling mechanism are properly closed.

It is also possible that opening of the handle 70 from its closed position automatically exerts a force on the actuating arm bringing it from its operative position to the release position again. As before, the conversion of the pivotal movement of the handle to a force acting on the actuating arm to bring it from its operative position to its release position can be realized in many ways including linkage assemblies or gear transmissions which perform the required conversion from the pivotal movement to a longitudinally directed force.

## Claims

1. Servo assisted actuating system for a multispeed gearbox of a vehicle, comprising a servo cylinder (30), a cable (1) adapted to be connected to a lever (92) at one end portion and to be connected to an actuating component by a coupling mechanism at its other end portion to transmit cable movements to actuating movements of the actuating component, and a control valve (60), the actuating component controlling the control valve to selectively supply pressurized fluid to the servo cylinder for operating it, **characterized in that**
the actuating component is an actuating arm (2) which extends from an inner chamber of the servo cylinder to the outside thereof to control the control valve by its actuating movements, wherein the actuating arm has disposed along its length a bearing portion (2') that is disposed in a bearing in the servo cylinder and wherein bearing portion and bearing are adapted to allow actuating movements of the actuating arm when the actuating arm is in an operative position, and the bearing portion and the bearing are further adapted to allow movements of the actuating arm (2) along its longitudinal direction between the operative position in which the actuating arm is operable to control the control valve (60) by actuating movements, and a shifted release position in which the actuating arm (2) is shifted in its longitudinal direction, wherein the actuating arm and the coupling mechanism are adapted such that the actuating arm is in engagement with the coupling mechanism at least in its operative position,
wherein the coupling mechanism comprises two coupling members (3, 6; 8) which are disposed within the inner chamber and moveable relative to each other between an open position in which an end portion of the cable (1) may be moved into a gap between the coupling members (3, 6; 8) when the cable is advanced through an entry opening into the servo cylinder, and an engaged position in which the coupling members (3, 6; 8) are able to engage and hold an end portion of the cable disposed therebetween,
wherein the coupling mechanism and the actuating arm are arranged to cooperate such that movement of the actuating arm (2) from its release position to its operative position brings the coupling members (3, 6; 8) from the open position to the engaged position on the end portion of the cable (1).

2. Servo assisted actuating system according to claim 1, **characterized in that** the bearing portion of the actuating arm (2) and the bearing are adapted to allow pivotal movements of the actuating arm around its bearing portion 2' as actuating movements for operating the control valve.

3. Servo assisted actuating system according to claim 2, **characterized in that** the bearing portion (2') of the actuating arm (2) is formed by a transverse projection from the actuating arm surface, and **in that** the bearing is formed by a passageway extending from the inner chamber of the servo cylinder in the direction to the outside of the servo cylinder, wherein the actuating arm extends through the passageway and the bearing portion (2') is disposed within the passageway such that the actuating arm may perform pivotal movement around its bearing portion (2') when the actuating arm is its operative position and wherein the bearing portion is slideable within the passageway such that the actuating arm (2) may be moved along its longitudinal direction by a sliding movement of the bearing portion (2') along the passageway in the direction to the outside of the servo cylinder from its operative to its release position.

4. Servo assisted actuating system according to any preceding claim, **characterized in that** the coupling mechanism and the actuating arm (2) are further arranged to cooperate such that movement of the actuating arm (2) from its operated position to its release position brings the coupling members (3, 6', 8) from the engaged position on the end portion of the cable (1) to the open position.

5. Servo assisted actuating system according to any preceding claim, **characterized in that** the coupling mechanism comprises as a first coupling member a locking body (3) to be connected to the inner end portion of the actuating arm (2) and which has an open channel in its surface facing away from the actuating arm, the open channel having a semicircular ground portion dimensioned to receive the end portion of the cable and having diverging side walls extending from the ground portion, which side walls flare to the open end of the channel, at least the ground portion of the channel comprising a plurality of grooves disposed in regular distances along the longitudinal direction of the channel and extending in planes perpendicular thereto to engage with complementary grooves on the outer surface of the end portion of the cable, and the second coupling member of the coupling mechanism is a snap-fastener (6), wherein the locking body (3) is moveable relative to the snap-fastener (6) between the engaged position in resilient engagement with the snap-fastener (6), in which engaged position a portion of the snap-fastener (6) projects into the channel to urge the end portion of the cable (1) received therein towards the ground portion of the channel, and the open position in which the locking body (3) is out of engagement with the snap-fastener (6) and moved vertically away therefrom such that the projecting portion is further away from the ground portion of the channel, wherein a force urging the snap-fastener (6) and the locking body (3) from the release position towards each other brings the locking body (3) to the engaged position and a force in the opposite direction brings the locking body (3) from the engaged position to the release position, and
a sleeve (7) disposed in the inner chamber holds housing parts (4, 5) that partially surround the locking body (3) and the snap-fastener (6) to hold them retained in a range between the engaged and the open position and positioned such that, when locking body (3) and snap-fastener (6) are in the open position, an end portion of the cable (4) may be introduced into the channel of the locking body by axially pushing the cable forward through the entry opening, whereas the housing parts (4, 5) allow relative movement of the locking body (3) with respect to the snap-fastener (6) between their engaged and open positions, and wherein the housing parts (4, 5) provide support for the snap-fastener such that a force urging locking body towards the snap-fastener brings locking body and snap-fastener to their engaged position.

6. Servo assisted actuating system according to claim 5, wherein the inner end portion of the actuating arm (2) and the locking body (3) comprise snap-in engagement means which cause a snap-in engagement of the actuating arm (2) on the locking body (3) when the actuating arm is pushed inwardly to bring it to its operative position, wherein snap-in engagement means are arranged such that the force on the actuating arm needed to release the snap-fastener from the locking body is lower than the force needed to release the snap-in engagement means between actuating arm and locking body.

7. Servo assisted actuating system according to claim 5 or 6, **characterized in that** the housing parts comprise a housing (4) in which the locking body (3) is received and which has an open side for inserting the snap-fastener opposite to the locking body, and a clip (5) adapted to be in snapped-in engagement with the housing, wherein the clip (5) in its engaged position closes the open side of the housing and wherein the housing (4) has apertures such that an end portion of the cable (1) may be advanced through the apertures and into the open channel of the locking body disposed within the housing.

8. Servo assisted actuating system according to claim 1, **characterized in that** the two coupling members of the coupling mechanism are two jaw members (8) which are pivotally connected to each other at one end to be pivotable between the engaged position in which they form a cable engaging channel and the open position in which the space between them is enlarged such that the end portion of a cable (1) may be moved longitudinally therein, wherein the jaw members (8) are held within the inner chamber of the servo cylinder and wherein the jaw members (8) comprise control surfaces and wherein the inner end portion of the actuating arm comprises cooperating control surfaces such that, when the actuating arm (2) is longitudinally moved from its release position to its operative position, the control surfaces cause the jaw members (8) to be moved to the engaged position.

9. Servo assisted actuating system according to claim 8, wherein the inner end portion of the actuating arm (2) and the jaw members (8) further comprise snap-in engagement members which cause a snap-in engagement of the actuating arm (2) on the coupled jaw members (8) when the actuating arm reaches its operative position.

10. Servo assisted actuating system according to claim 8 or 9, **characterized in that** a spring element is provided to bias the jaw members (8) to the open position.

11. Servo assisted actuating system according to any of the preceding claims, **characterized in that** the servo cylinder (30) comprises a piston (32) and a piston rod (34) extending therefrom and that the end portion of the cable (1) is guided via a through hole (35) extending through the piston rod and the piston into the inner chamber of the servo cylinder where the coupling mechanism is located.

12. Servo assisted actuating system according to any of the preceding claims, **characterized in that** a handle (70) is moveably mounted on the servo cylinder (30) or on the control valve (60) and is moveable between and open and a closed position, and **in that** the handle is arranged to act on the outer end portion of the actuating arm (2) such that, when the handle is moved from its open to the closed position, a force is exerted on the outer end of the actuating arm (2) which causes the actuating arm to be moved from the released position to its operative position.

13. Servo assisted actuating system according to claim 12, **characterized in that** the handle (70) is pivotably mounted on the servo cylinder (30) or at the control valve (60) at a point spaced apart from the actuating arm and is adapted to cooperate with the outer end portion of the actuating arm (2) such that, when the handle (70) is pivoted from a folded away, open position towards the servo cylinder or control valve to the closed position thereon, a force is exerted on the outer end of the actuating arm which causes the actuating arm to be moved from the release position to the operative position.

14. Servo assisted actuating system according to Claim 12 or 13, **characterized in that** the handle (70) is further provided with opening means which, when the handle is moved from its closed position to its open position, exert an outwardly directed force on the outer end of the actuating arm so to move the actuating arm from the operative position to the release position.

15. Servo assisted actuating system according to Claim 12, 13 or 14, **characterized in that** an engaging pawl mechanism associated with the handle is provided, which engaging pawl mechanism locks the handle in the closed position folded on the servo cylinder or the control valve.

16. Servo assisted actuating system according to any of claims 12 to 15, **characterized in that** feedback means are provided that generate an audible or visible indication when the handle reaches the closed position.

## Patentansprüche

1. Servounterstütztes Bestätigungssystem für ein Mehrganggetriebe eines Fahrzeugs mit einem Servozylinder (30), einem Seilzug (1), der dazu ausgestaltet ist, an einem Endbereich mit einem Hebel (92) verbunden zu werden und an seinem anderen Endbereich durch einen Kopplungsmechanismus mit einer Betätigungskomponente verbunden zu werden, um Seilzugbewegungen in Betätigungsbewegungen der Betätigungskomponente umzusetzen, und einem Steuerventil (60), wobei die Betätigungskomponente das Steuerventil dazu steuert, um dem Servozylinder selektiv Druckfluid zuzuführen, um ihn zu betätigen, **dadurch gekennzeichnet, dass**
die Betätigungskomponente ein Betätigungsarm (2) ist, der aus einer inneren Kammer des Servozylinders in dessen Außenraum verläuft, um das Steuerventil durch seine Betätigungsbewegungen zu steuern, wobei der Betätigungsarm entlang seiner Länge einen Lagerbereich (2') hat, der in einem Lager in dem Servozylinder angeordnet ist, und wobei Lagerbereich und Lager dazu ausgestaltet sind, um Betätigungsbewegungen des Betätigungsarms zu erlauben, wenn der Betätigungsarm in einer Betriebsstellung ist, und wobei der Lagerbereich und das Lager weiter dazu ausgestaltet sind, um Bewegungen des Betätigungsarms (2) entlang seiner Längsrichtung zwischen der Betriebsstellung, in der der Betätigungsarm zur Steuerung des Steuerventils (60) durch Betätigungsbewegungen betreibbar ist, und einer verschobenen Freigabestellung zu ermöglichen, in der der Betätigungsarm (2) in seiner Längsrichtung verschoben ist, wobei der Betätigungsarm und der Kopplungsmechanismus so ausgestaltet sind, dass der Betätigungsarm wenigstens in seiner Betriebsstellung in Eingriff mit dem Kopplungsmechanismus steht,
wobei der Kopplungsmechanismus zwei Kopplungsteile (3, 6; 8) aufweist, die innerhalb der inneren Kammer angeordnet sind und relativ zueinander zwischen einer offenen Stellung, in der ein Endbereich des Seilzugs (1) in eine Lücke zwischen den Kopplungsteilen (3, 6; 8) bewegt werden kann, wenn der Seilzug durch eine Eintrittsöffnung in den Servozylinder vorgeschoben wird, und einer Eingriffsstellung beweglich sind, in der die Kopplungsteile (3, 6; 8) dazu in der Lage sind, einen Endbereich des Seilzugs zu greifen und dazwischen festzuhalten,
wobei der Kopplungsmechanismus und der Betätigungsarm dazu ausgestaltet sind, in einer solchen Weise zusammenzuwirken, dass eine Bewegung des Betätigungsarms (2) aus der Freigabestellung in die Betriebsstellung die Kopplungsteile (3, 6; 8) aus der offenen Stellung in die Eingriffsstellung an dem Endbereich des Seilzugs (1) zu bringen.

2. Servounterstütztes Betätigungssystem nach Anspruch 1, **dadurch gekennzeichnet, dass** der Lagerbereich des Betätigungsarms (2) und das Lager dazu ausgestaltet sind, um Schwenkbewegungen des Betätigungsarms um seinen Lagerbereich (2') als Betätigungsbewegungen zum Betätigen des Steuerventils zu erlauben.

3. Servounterstütztes Betätigungssystem nach Anspruch 2, **dadurch gekennzeichnet, dass** der Lagerbereich (2') des Betätigungsarms (2) durch einen querverlaufenden Vorsprung von der Betätigungsarmoberfläche gebildet ist und dass das Lager durch einen Durchgang gebildet ist, der von der inneren Kammer des Servozylinders in die Richtung des Außenraums des Servozylinders verläuft, wobei der Betätigungsarm durch den Durchgang verläuft und der Lagerbereich (2') sich in dem Durchgang befindet, so dass der Betätigungsarm eine Schwenkbewegung um seinen Lagerbereich (2') ausführen kann, wenn der Betätigungsarm sich in der Betriebsstellung befindet, und wobei der Lagerbereich innerhalb des Durchgangs gleitfähig ist, so dass der Betätigungsarm (2) entlang seiner Längsrichtung durch eine Gleitbewegung des Lagerbereichs (2') entlang des Durchgangs in die Richtung des Außenraums des Servozylinders aus seiner Betriebsstellung in die Freigabestellung bewegt werden kann.

4. Servounterstütztes Betätigungssystem nach einem der vorhergehenden Ansprüche, **dadurch gekennzeichnet, dass** der Kopplungsmechanismus und der Betätigungsarm (2) weiter dazu ausgestaltet sind, in der Weise zusammenzuwirken, dass eine Bewegung des Betätigungsarms (2) aus seiner Betriebsstellung in seine Freigabestellung die Kopplungsteile (3, 6', 8) aus der Eingriffsstellung an dem Endbereich des Seilzugs (1) in die offene Stellung bringt.

5. Servounterstütztes Betätigungssystem nach einem der vorhergehenden Ansprüche, **dadurch gekennzeichnet, dass** der Kopplungsmechanismus als ein erstes Kopplungsteil einen Verschlusskörper (3) aufweist, der mit dem inneren Endbereich des Betätigungsarms (2) zu verbinden ist und der in seiner von dem Betätigungsarm weg weisenden Oberfläche einen offenen Kanal hat, wobei der offene Kanal einen halbkreisförmigen Bodenbereich mit solchen Abmessungen, um den Endbereich des Seilzugs aufzunehmen, und auseinanderlaufende Seitenwände hat, die von dem Bodenbereich ausgehen, wobei die Seitenwände sich zum offenen Ende des Kanals hin aufweiten, wobei wenigstens der Bodenbereich des Kanals eine Vielzahl von in gleichmäßigen Abständen entlang der Längsrichtung des Kanals und in Ebenen senkrecht dazu verlaufende Rillen ausweist, um mit komplementären Rillen an der äußeren Oberfläche des Endbereichs des Seilzugs einzugreifen, und wobei das zweite Kopplungsteil des Kopplungsmechanismus ein Schnappverbinder (6) ist, wobei der Verschlusskörper (3) relativ zu dem Schnappverbinder (6) zwischen der Eingriffsstellung in elastischem Eingriff mit dem Schnappverbinder (6), wobei in der Eingriffsstellung ein Bereich des Schnappverbinders (6) in den Kanal hineinragt, um den darin aufgenommenen Endbereich des Seilzugs (1) zum Bodenbereich des Kanals zu drücken, und der offenen Stellung beweglich ist, in der der Verschlusskörper (3) außer Eingriff mit dem Schnappverbinder (6) und vertikal davon weg bewegt ist, so dass der vorstehende Bereich weiter entfernt von dem Bodenbereich des Kanals ist, wobei eine Kraft, die den Schnappverbinder (6) und den Verschlusskörper (3) aus der Freigabestellung aufeinander zu bewegt, den Verschlusskörper (3) in die Eingriffsstellung bringt, und eine entgegengesetzt gerichtete Kraft den Verschlusskörper aus der Eingriffsstellung in die Freigabestellung bringt,
dass eine in der inneren Kammer angeordnete Hülse (7) Gehäuseteile (4, 5) hält, die den Verschlusskörper (3) und den Schnappverbinder (6) teilweise umgeben, um sie in einem Bereich zwischen der Eingriffsstellung und der offenen Stellung zurückzuhalten und so positioniert zu halten, dass, wenn Verschlusskörper (3) und Schnappverbinder (6) sich in der offenen Stellung befinden, ein Endbereich des Seilzugs (4) in den Kanal des Verschlusskörpers eingeführt werden kann, indem der Seilzug durch die Eintrittsöffnung vorwärts geschoben wird, wohingegen die Gehäuseteile (4, 5) eine relative Bewegung des Verschlusskörpers (3) in Bezug auf den Schnappverbinder (6) zwischen ihrer Eingriffsstellung und ihrer offenen Stellung erlauben und wobei die Gehäuseteile (4, 5) eine Halterung für den Schnappverbinder in der Weise bereitstellen, dass eine Kraft, die den Verschlusskörper zu dem Schnappverbinder hin drückt, den Verschlusskörper und den Schnappverbinder in ihre Eingriffsstellung bringt.

6. Servounterstütztes Betätigungssystem nach Anspruch 5, wobei der innere Endbereich des Betätigungsarms (2) und der Verschlusskörper (3) Einschnappverbindungseinrichtungen aufweisen, die eine Einschnappverbindung des Betätigungsarms (2) an dem Verschlusskörper (3) bewirken, wenn der Betätigungsarm nach innen gedrückt wird, um ihn in seine Betriebsstellung zu bringen, wobei die Einschnappverbindungseinrichtungen so ausgestaltet sind, dass die Kraft auf den Betätigungsarm, die benötigt wird, um den Schnappverbinder von dem Verschlusskörper zu lösen, geringer ist als die Kraft, die benötigt wird, um die Einschnappverbindungseinrichtungen zwischen dem Betätigungsarm und dem Verschlusskörper zu lösen.

7. Servounterstütztes Betätigungssystem nach Anspruch 5 oder 6, **dadurch gekennzeichnet, dass** die Gehäuseteile ein Gehäuse (4), in dem der Verschlusskörper (3) aufgenommen ist und das eine offene Seite zum Einsetzen des Schnappverbinders gegenüber dem Verschlusskörper hat, und einen Clip (5) aufweisen, der dazu ausgestaltet ist, um in Einschnappverbindung mit dem Gehäuse zu sein, wobei der Clip (5) in seiner Eingriffsstellung die offene Seite des Gehäuses schließt und wobei das Gehäuse (4) Öffnungen hat, so dass ein Endbereich des Seilzugs (1) durch die Öffnungen und in den offenen Kanal des innerhalb des Gehäuses angeordneten Verschlusskörpers vorgeschoben werden kann.

8. Servounterstütztes Betätigungssystem nach Anspruch 1, **dadurch gekennzeichnet, dass** die beiden Kopplungsteile des Kopplungsmechanismus zwei Zangenbacken (8) sind, die schwenkbar an einem Ende miteinander verbunden sind, um zwischen der Eingriffsstellung, in der sie einen an dem Seilzug angreifenden Kanal bilden, und der offenen Stellung schwenkbar zu sein, in der der Raum zwischen ihnen vergrößert ist, so dass der Endbereich des Seilzugs (1) in Längsrichtung darin bewegt werden kann, wobei die Zangenbacken (8) innerhalb der inneren Kammer des Servozylinders gehalten sind und wobei die Zangenbacken (8) Steuerflächen aufweisen und wobei der innere Endbereich des Betätigungsarms damit zusammenwirkende Steuerflächen aufweist, so dass, wenn der Betätigungsarm (2) in Längsrichtung aus seiner Freigabestellung in seine Betriebsstellung bewegt wird, die Steuerflächen die Zangenbacken (8) dazu veranlassen, um in die Eingriffsstellung bewegt zu werden.

9. Servounterstütztes Betätigungssystem nach Anspruch 8, wobei der innere Endbereich des Betätigungsarms (2) und die Zangenbacken (8) weiter Einschnappteile aufweisen, die eine Einschnappverbindung des Betätigungsarms (2) an den gekoppelten Zangenbacken (8) bewirken, wenn der Betätigungsarm seine Betriebsstellung erreicht.

10. Servounterstütztes Betätigungssystem nach Anspruch 8 oder 9, **dadurch gekennzeichnet, dass** ein Federelement vorgesehen ist, um die Zangenbacken (8) in die offene Stellung vorzuspannen.

11. Servounterstütztes Betätigungssystem nach einem der vorhergehenden Ansprüche, **dadurch gekennzeichnet, dass** der Servozylinder (30) einen Kolben (32) und eine davon ausgehende Kolbenstange (34) aufweist und dass der Endbereich des Seilzugs (1) durch eine Durchgangsöffnung (35) geführt ist, die durch die Kolbenstange und den Kolben in die innere Kammer des Servozylinders verläuft, wo der Kopplungsmechanismus angeordnet ist.

12. Servounterstütztes Betätigungssystem nach einem der vorhergehenden Ansprüche, **dadurch gekennzeichnet, dass** ein Griff (70) beweglich an dem Servozylinder (30) oder an dem Steuerventil (60) angebracht ist und zwischen einer offenen und einer geschlossenen Stellung beweglich ist und dass der Griff dazu ausgestaltet ist, um auf den äußeren Endbereich des Betätigungsarms (2) einzuwirken, so dass, wenn der Griff aus seiner offenen in die geschlossene Stellung bewegt wird, eine Kraft auf das äußere Ende des Betätigungsarms (2) ausgeübt wird, die bewirkt, dass der Betätigungsarm aus seiner Freigabestellung in die Betriebsstellung bewegt wird.

13. Servounterstütztes Betätigungssystem nach Anspruch 12, **dadurch gekennzeichnet, dass** der Griff (70) schwenkbar an dem Servozylinder (30) oder dem Steuerventil (60) an einem Ort entfernt von dem Betätigungsarm angebracht ist und dazu ausgestaltet ist, um mit dem äußeren Endbereich des Betätigungsarms (2) so zusammenzuwirken, dass, wenn der Griff (70) aus einer weggeschwenkten, offenen Stellung zu dem Servozylinder oder dem Steuerventil hin in seine geschlossene Stellung geschwenkt wird, eine Kraft auf den äußeren Endbereich des Betätigungsarms ausgeübt wird, die den Betätigungsarm dazu veranlasst, aus der Freigabestellung in die Betriebsstellung bewegt zu werden.

14. Servounterstütztes Betätigungssystem nach Anspruch 12 oder 13, **dadurch gekennzeichnet, dass** der Griff (70) weiter mit einer Öffnungseinrichtung versehen ist, die, wenn der Griff aus seiner geschlossen in seine offene Stellung bewegt wird, eine nach außen gerichtete Kraft auf das äußere Ende des Betätigungsarms ausübt, um so den Betätigungsarm aus der Betriebsstellung in die Freigabestellung zu bewegen.

15. Servounterstütztes Betätigungssystem nach Anspruch 12, 13 oder 14, **dadurch gekennzeichnet, dass** ein dem Griff zugeordneter eingreifender Klinkenmechanismus vorgesehen ist, wobei der eingreifende Klinkenmechanismus den Griff in der geschlossenen, an den Servozylinder oder das Steuerventil herangeschwenkten Stellung verriegelt.

16. Servounterstütztes Betätigungssystem nach einem der Ansprüche 12 bis 15, **dadurch gekennzeichnet, dass** eine Rückmeldeeinrichtung vorgesehen ist, die eine hörbare oder sichtbare Anzeige erzeugt, wenn der Griff die geschlossene Stellung erreicht.

## Revendications

1. Système d'actionnement assisté par un servomécanisme pour boîte à plusieurs vitesses d'un véhicule, comprenant un vérin asservi (30), un câble (1) prévu pour être connecté à un levier (92) au niveau d'une partie d'extrémité et pour être connecté à un composant d'actionnement par un mécanisme d'accouplement au niveau de son autre partie d'extrémité pour transmettre des mouvements du câble à des mouvements d'actionnement du composant d'actionnement, et une soupape de commande (60), le composant d'actionnement commandant la soupape de commande pour fournir de manière sélective du fluide sous pression au vérin asservi afin de le faire fonctionner,
**caractérisé en ce que**
le composant d'actionnement est un bras d'actionnement (2) qui s'étend depuis une chambre interne du vérin asservi jusqu'à l'extérieur de celle-ci pour commander la soupape de commande par ses mouvements d'actionnement, sur le bras d'actionnement étant disposée, le long de sa longueur, une partie de palier (2') qui est disposée dans un palier dans le vérin asservi et la partie de palier et le palier étant prévus pour permettre des mouvements d'actionnement du bras d'actionnement lorsque le bras d'actionnement est dans une position fonctionnelle, et la partie de palier et le palier étant en outre prévus pour permettre des mouvements du bras d'actionnement (2) le long de sa direction longitudinale entre la position fonctionnelle dans laquelle le bras d'actionnement peut fonctionner pour commander la soupape de commande (60) par des mouvements d'actionnement et une position de libération décalée dans laquelle le bras d'actionnement (2) est décalé dans sa direction longitudinale, le bras d'actionnement et le mécanisme d'accouplement étant prévus de telle sorte que le bras d'actionnement soit en prise avec le mécanisme d'accouplement au moins dans sa position fonctionnelle,
le mécanisme d'accouplement comprenant deux organes d'accouplement (3, 6 ; 8) qui sont disposés à l'intérieur de la chambre interne et qui peuvent être déplacés l'un par rapport à l'autre entre une position ouverte dans laquelle une partie d'extrémité du câble (1) peut être déplacée dans un espace entre les organes d'accouplement (3, 6 ; 8) lorsque le câble est avancé à travers une ouverture d'entrée jusque dans le vérin asservi et une position engagée dans laquelle les organes d'accouplement (3, 6 ; 8) sont aptes à s'engager avec et à retenir une partie d'extrémité du câble disposé entre eux,
le mécanisme d'accouplement et le bras d'actionnement étant prévus pour coopérer de telle sorte que le mouvement du bras d'actionnement (2) depuis sa position de libération jusqu'à sa position fonctionnelle amène les organes d'accouplement (3, 6 ; 8) de la position ouverte dans la position engagée sur la partie d'extrémité du câble (1).

2. Système d'actionnement assisté par un servomécanisme selon la revendication 1, **caractérisé en ce que** la partie de palier du bras d'actionnement (2) et le palier sont prévus pour permettre des mouvements de pivotement du bras d'actionnement autour de sa partie de palier (2') en tant que mouvements d'actionnement pour faire fonctionner la soupape de commande.

3. Système d'actionnement assisté par un servomécanisme selon la revendication 2, **caractérisé en ce que** la partie de palier (2') du bras d'actionnement (2) est formée par une partie transversale saillant depuis la surface du bras d'actionnement, et **en ce que** le palier est formé par un passage s'étendant depuis la chambre interne du vérin asservi dans la direction vers l'extérieur du vérin asservi, le bras d'actionnement s'étendant à travers le passage et la partie de palier (2') étant disposée à l'intérieur du passage de telle sorte que le bras d'actionnement puisse effectuer un mouvement de pivotement autour de sa partie de palier (2') lorsque le bras d'actionnement est dans sa position fonctionnelle et la partie de palier pouvant coulisser à l'intérieur du passage de telle sorte que le bras d'actionnement (2) puisse être déplacé le long de sa direction longitudinale par un mouvement de coulissement de la partie de palier (2') le long du passage dans la direction vers l'extérieur du vérin asservi depuis sa position fonctionnelle jusqu'à sa position de libération.

4. Système d'actionnement assisté par un servomécanisme selon l'une quelconque des revendications précédentes, **caractérisé en ce que** le mécanisme d'accouplement et le bras d'actionnement (2) sont en outre prévus pour coopérer de telle sorte que le mouvement du bras d'actionnement (2) de sa position fonctionnelle dans sa position de libération amène les organes d'accouplement (3, 6', 8) de la position engagée sur la partie d'extrémité du câble (1) dans la position ouverte.

5. Système d'actionnement assisté par un servomécanisme selon l'une quelconque des revendications précédentes, **caractérisé en ce que** le mécanisme d'accouplement comprend, en tant que premier organe d'accouplement, un corps de verrouillage (3) devant être connecté à la partie d'extrémité interne du bras d'actionnement (2) et qui présente un canal ouvert dans sa surface éloignée du bras d'actionnement, le canal ouvert ayant une partie de base semi-circulaire dimensionnée de manière à recevoir la partie d'extrémité du câble et ayant des parois latérales divergentes s'étendant depuis la partie de base, lesquelles parois latérales s'évasent jusqu'à l'extrémité ouverte du canal, au moins la partie de base du canal comprenant une pluralité de gorges disposées à intervalles réguliers le long de la direction longitudinale du canal et s'étendant dans des plans perpendiculaires à celle-ci de manière à s'engager avec des gorges complémentaires sur la surface extérieure de la partie d'extrémité du câble, et le deuxième organe d'accouplement du mécanisme d'accouplement est une attache par encliquetage (6), le corps de verrouillage (3) pouvant être déplacé par rapport à l'attache par encliquetage (6) entre la position engagée en engagement élastique avec l'attache par encliquetage (6), dans laquelle position engagée une partie de l'attache par encliquetage (6) fait saillie dans le canal pour pousser la partie d'extrémité du câble (1) reçue dans celui-ci vers la partie de base du canal, et la position ouverte dans laquelle le corps de verrouillage (3) est désengagé de l'attache par encliquetage (6) et est déplacé verticalement à l'écart de celle-ci de telle sorte que la partie saillante soit plus éloignée de la partie de base du canal, une force poussant l'attache par encliquetage (6) et le corps de verrouillage (3) depuis la position de libération l'un vers l'autre amenant le corps de verrouillage (3) dans la position engagée et une force dans la direction opposée amenant le corps de verrouillage (3) de la position engagée jusqu'à la position de libération, et
un manchon (7) disposé dans la chambre interne retient des parties de boîtier (4, 5) qui entourent en partie le corps de verrouillage (3) et l'attache par encliquetage (6) afin de les retenir de manière maintenue dans une plage entre la position engagée et la position ouverte et de manière positionnée de telle sorte que, lorsque le corps de verrouillage (3) et l'attache par encliquetage (6) sont dans la position ouverte, une partie d'extrémité du câble (4) puisse être introduite dans le canal du corps de verrouillage en poussant axialement le câble vers l'avant à travers l'ouverture d'entrée, tandis que les parties de boîtier (4, 5) permettent un mouvement relatif du corps de verrouillage (3) par rapport à l'attache par encliquetage (6) entre leurs positions engagée et ouverte, et les parties de boîtier (4, 5) fournissant un support pour l'attache par encliquetage de telle sorte qu'une force poussant le corps de verrouillage vers l'attache par encliquetage amène le corps de verrouillage et l'attache par encliquetage dans leur position engagée.

6. Système d'actionnement assisté par un servomécanisme selon la revendication 5, dans lequel la partie d'extrémité interne du bras d'actionnement (2) et le corps de verrouillage (3) comprennent des moyens d'engagement par encliquetage qui provoquent un engagement par encliquetage du bras d'actionnement (2) sur le corps de verrouillage (3) lorsque le bras d'actionnement est poussé vers l'intérieur pour l'amener dans sa position fonctionnelle, les moyens d'engagement par encliquetage étant prévus de telle sorte que la force sur le bras d'actionnement, requise pour libérer l'attache par encliquetage du corps de verrouillage, soit inférieure à la force requise pour libérer les moyens d'engagement par encliquetage entre le bras d'actionnement et le corps de verrouillage.

7. Système d'actionnement assisté par un servomécanisme selon la revendication 5 ou 6, **caractérisé en ce que** les parties de boîtier comprennent un boîtier (4) dans lequel est reçu le corps de verrouillage (3) et qui présente un côté ouvert pour insérer l'attache par encliquetage à l'opposé du corps de verrouillage, et une pince (5) prévue pour être en engagement encliqueté avec le boîtier, la pince (5), dans sa position engagée, fermant le côté ouvert du boîtier et le boîtier (4) présentant des ouvertures de telle sorte qu'une partie d'extrémité du câble (1) puisse être avancée à travers les ouvertures jusque dans le canal ouvert du corps de verrouillage disposé à l'intérieur du boîtier.

8. Système d'actionnement assisté par un servomécanisme selon la revendication 1, **caractérisé en ce que** les deux organes d'accouplement du mécanisme d'accouplement sont deux organes de mâchoire (8) qui sont connectés de manière pivotante l'un à l'autre à une extrémité de façon à pouvoir pivoter entre la position engagée dans laquelle ils forment un canal d'engagement de câble et la position ouverte dans laquelle l'espace entre eux est agrandi de telle sorte que la partie d'extrémité d'un câble (1) puisse être déplacée longitudinalement dans ceux-ci, les organes de mâchoire (8) étant retenus à l'intérieur de la chambre interne du vérin asservi et les organes de mâchoire (8) comprenant des surfaces de commande et la partie d'extrémité interne du bras d'actionnement comprenant des surfaces de commande coopérantes de telle sorte que, lorsque le bras d'actionnement (2) est déplacé longitudinalement de sa position de libération dans sa position fonctionnelle, les surfaces de commande provoquent le déplacement des organes de mâchoire (8) dans la position engagée.

9. Système d'actionnement assisté par un servomécanisme selon la revendication 8, dans lequel la partie d'extrémité interne du bras d'actionnement (2) et les organes de mâchoire (8) comprennent en outre des organes d'engagement par encliquetage qui provoquent un engagement par encliquetage du bras d'actionnement (2) sur les organes de mâchoire accouplés (8) lorsque le bras d'actionnement atteint sa position fonctionnelle.

10. Système d'actionnement assisté par un servomécanisme selon la revendication 8 ou 9, **caractérisé en ce qu'**un élément de ressort est prévu pour solliciter les organes de mâchoire (8) dans la position ouverte.

11. Système d'actionnement assisté par un servomécanisme selon l'une quelconque des revendications précédentes, **caractérisé en ce que** le vérin asservi (30) comprend un piston (32) et une tige de piston (34) s'étendant depuis celui-ci et **en ce que** la partie d'extrémité du câble (1) est guidée par le biais d'un trou traversant (35) s'étendant à travers la tige de piston et le piston jusque dans la chambre interne du vérin asservi dans laquelle est situé le mécanisme d'accouplement.

12. Système d'actionnement assisté par un servomécanisme selon l'une quelconque des revendications précédentes, **caractérisé en ce qu'**une poignée (70) est montée de manière mobile sur le vérin asservi (30) ou sur la soupape de commande (60) et peut être déplacée entre une position ouverte et une position fermée, et **en ce que** la poignée est prévue pour agir sur la partie d'extrémité externe du bras d'actionnement (2) de telle sorte que lorsque la poignée est déplacée de sa position ouverte dans la position fermée, une force s'exerce sur l'extrémité externe du bras d'actionnement (2), laquelle provoque le déplacement du bras d'actionnement de la position libérée jusqu'à sa position fonctionnelle.

13. Système d'actionnement assisté par un servomécanisme selon la revendication 12, **caractérisé en ce que** la poignée (70) est montée de manière pivotante sur le vérin asservi (30) ou au niveau de la soupape de commande (60) en un point espacé du bras d'actionnement et est prévue pour coopérer avec la partie d'extrémité externe du bras d'actionnement (2) de telle sorte que lorsque la poignée (70) est pivotée d'une position ouverte écartée par repliement vers le vérin asservi ou vers la soupape de commande jusqu'à la position fermée sur celui-ci ou celle-ci, une force s'exerce sur l'extrémité externe du bras d'actionnement, laquelle provoque le déplacement du bras d'actionnement de la position de libération jusqu'à la position fonctionnelle.

14. Système d'actionnement assisté par un servomécanisme selon la revendication 12 ou 13, **caractérisé en ce que** la poignée (70) est en outre pourvue de moyens d'ouverture qui, lorsque la poignée déplacée de sa position fermée dans sa position ouverte, exercent une force orientée vers l'extérieur sur l'extrémité externe du bras d'actionnement de manière à déplacer le bras d'actionnement de la position fonctionnelle jusqu'à la position de libération.

15. Système d'actionnement assisté par un servomécanisme selon la revendication 12, 13 ou 14, **caractérisé en ce qu'**un mécanisme de cliquet d'engagement associé à la poignée est prévu, lequel mécanisme de cliquet d'engagement verrouille la poignée dans la position fermée repliée sur le vérin asservi ou sur la soupape de commande.

16. Système d'actionnement assisté par un servomécanisme selon l'une quelconque des revendications 12 à 15, **caractérisé en ce que** des moyens de rétroaction sont prévus, lesquels produisent une indication audible ou visible lorsque la poignée atteint la position fermée.
